# EUROPÄISCHE PATENTANMELDUNG

(11) **EP 0 670 429 A1**
(43) Veröffentlichungstag der Anmeldung: **06.09.1995**
(21) Anmeldenummer: 95101900.9
(22) Anmeldetag: 13.02.1995
(51) Int. Cl.: F16B 13/14

(54) **Durch Einschlagen verankerbares Befestigungselement**

(30) Priorität: 03.03.1994 DE 4406953
(71) Anmelder: fischerwerke Artur Fischer GmbH & Co. KG, D-72178 Waldachtal (DE)
(72) Erfinder: Fischer, Artur, Prof. Dr. h. c., D-72178 Waldachtal (DE)

(57) **Zusammenfassung**

Es wird ein Befestigungselement mit Spreizbereich (3) vorgeschlagen, der durch einen Kerbvorgang nach außen gewölbte Spreizschenkel (9, 10) besitzt. Zwischen den Spreizschenkeln (9, 10) befindet sich eine Längskerbe (8), die von dem vor dem Spreizbereich liegenden geraden Schaftabschnitt (7) ausgeht und bis zur vorderen Stirnseite (5) verläuft. Zur Erhöhung des Haltewertes des verankerten Befestigungselementes (1, 1a), insbesondere in einem weniger festen Ankergrund, weist das Befestigungselement (1, 1a) einen sich vom hinteren Stirnende (12) bis zur Längskerbe (8) sich erstreckenden Injektionskanal (11) auf, durch den nach dem Einschlagen des Befestigungselementes (1, 1a) eine aushärtbare Verbundmasse eingespritzt werden kann.

## Beschreibung

Die Erfindung betrifft ein Befestigungselement mit einem im Abstand von der vorderen Stirnseite angeordneten und durch Einschlagen verankerbaren Spreizbereich gemäß Oberbegriff des Anspruches 1.

Aus der DE 33 45 331 A1 ist ein als Nagel ausgebildetes Befestigungselement bekannt, das im Bereich seiner vorderen Nagelstirnseite einen Spreizbereich hat, der von Zwei im Abstand verlaufenden, nach außen gewölbten Schenkeln gebildet wird. Die Verankerung eines solchen Befestigungselements erfolgt in der Weise, daß dessen Schaft in ein vorgebohrtes Bohrloch eines Mauerwerks oder dgl. eingeschlagen wird. Beim Eintreiben des Schafts in das Bohrloch werden die Spreizschenkel von der Bohrlochwandung nach innen zusammengepreßt, wobei durch eine zwischen den Spreizschenkeln befindliche Einlage ein erhöhter Druck von den Spreizschenkeln gegen die Bohrlochwandung erzeugt werden kann. Nach dem Eintreiben werden die Spreizschenkel des Befestigungselements durch die plastische und/oder elastische Rückstellkraft der Einlage gegen die Bohrlochwandung gepreßt, wodurch eine entsprechend hohe Haltekraft erreicht wird. Allerdings ist aufgrund der Einlage der Eintreibwiderstand des bekannten Nagels sehr hoch.

Des weiteren sind derartige, durch Einschlagen verankerbare Befestigungselemente nur bei einem harten Verankerungsgrund, beispielsweise hochfestem Beton, verwendbar. In weicheren Baustoffen, insbesondere Gebirgsstein, reicht der vom Baustoff ausgeübte Umgebungsdruck nicht aus, um eine Verformung der nach außen gewölbten Spreizschenkel zu erzeugen. Es entsteht zwar eine Reibung zwischen der Bohrlochwandung und der Außenfläche der Spreizschenkel, die jedoch eine nur geringfügige Haltekraft bewirkt.

Der Erfindung liegt die Aufgabe zugrunde, ein durch Einschlagen verankerbares Befestigungselement zu schaffen, dessen Haltekraft insbesondere bei einem Einsatz in einem weniger festen Baustoff nachträglich erhöht werden kann.

Die Lösung dieser Aufgabe erhält man durch die im Anspruch 1 angegebenen Merkmale. Die durch die Längskerbe gebildeten und seitlich abstehenden Spreizschenkel werden beim Einschlagen des Befestigungselementes in ein Bohrloch eines harten Baustoffes durch plastische und elastische Verformung nach innen gedrückt und bilden damit einen Reibschluß mit der Bohrlochwandung. Aufgrund des elastischen und plastischen Verformungsanteils des Spreizbereiches ergeben sich hohe Haltewerte. Durch den elastischen Verformungsanteil ist das Befestigungselement auch in der Lage, eine Bohrlocherweiterung, beispielsweise durch Rißbildung, ohne größeren Haltewertverlust auszugleichen.

In weicheren Baustoffen, beispielsweise einem niederfesten Beton, Gebirgsstein oder dergleichen, tritt keine oder nur eine geringe Verformung der Spreizschenkel ein. Zur Steigerung der Haltekraft in derartigen Baustoffen wird durch den Injektionskanal des bereits eingetriebenen und vorverankerten Befestigungselementes eine aushärtbare Verbundmasse injiziert. Der bis zur Längskerbe sich erstreckende Injektionskanal leitet die Verbundmasse zum Spreizbereich des Befestigungselementes, der damit zusätzlich im Bohrloch des Verankerungsgrundes verklebt wird. Die Verbundmasse tritt entlang der Längskerbe aus dem Befestigungselement aus und verfüllt die Poren und Spalte zwischen der Außenfläche des Befestigungselementes und der Bohrlochwandung. Durch einen hohen Spritzdruck wird auch eine Verdichtung des weichen und porösen Verankerungsgrundes erreicht, so daß sich zusätzlich zu der Verbesserung des Haltewertes auch ein Korrosionsschutz für den Spreizbereich des Befestigungselementes ergibt. Als Verbundmasse wird vorzugsweise ein Epoxid- oder Polyesterharz verwendet, das mittels einer Kartusche, in der die Komponenten des Harzsystemes vorher vermischt werden, eingespritzt wird. Der zu befestigende Gegenstand wird über einen am Befestigungselement ausgebildeten Kopf oder einer auf ein Außengewinde des Befestigungselementes aufschraubbaren Mutter verspannt und gehalten. In der Regel reichen die Haltekräfte des noch ohne Verbundmasse verankerten Befestigungselementes aus, um den zu befestigenden Gegenstand zu halten. Es ist damit nicht erforderlich, für die Befestigung des Gegenstandes bis zum Aushärten der Verbundmasse zu warten. Die Steigerung der Haltekraft erhöht in erster Linie die Sicherheit der Befestigung durch Aufnahme von Zusatzbelastungen bzw. Überlastungen.

Zum einfacheren Ansetzen der Mündungsdüse der Kartusche weist der Injektionskanal am hinteren Stirnende eine V-förmige Erweiterung auf.

Bei Befestigungselementen mit einem längeren Spreizbereich oder zur Verdichtung des Baustoffes um den Spreizbereich kann zum Ansetzen einer Injektionspresse in den Injektionskanal ein am hinteren Stirnende abstehender Spritznippel, beispielsweise durch Einschrauben in ein entsprechendes Innengewinde des Injektionskanals, eingesetzt werden.

Zur Erzielung einer Verzahnung zwischen dem Spreizbereich des Befestigungselementes und der Verbundmasse kann die Innenfläche der Längskerbe mit quer zur Längsrichtung stehenden Rippen und die Außenfläche der Spreizschenkel mit einer durch Kerben gebildeten Aufrauhung versehen sein.

Zum Abdichten des Bohrloches im Verankerungsgrund beim Injizieren der Verbundmasse kann am Übergangsbereich von dem vor dem Spreizbereich liegenden geraden Schaftabschnitt zum Spreizbereich ein aus einem elastischen Kunststoff bestehender Dichtring angeordnet sein.

Die Erfindung wird nachfolgend anhand der in der Zeichnung dargestellten Ausführungsbeispiele näher erläutert.

Es zeigen:
- Figur 1: das mit einem Nagelkopf ausgebildete Befestigungselement,
- Figur 2: eine Draufsicht auf die vordere Stirnseite des Befestigungselementes,
- Figur 3: einen Längsschnitt des Befestigungselementes und
- Figur 4: eine weitere Ausführungsform des Befestigungselementes nach seiner Verankerung.

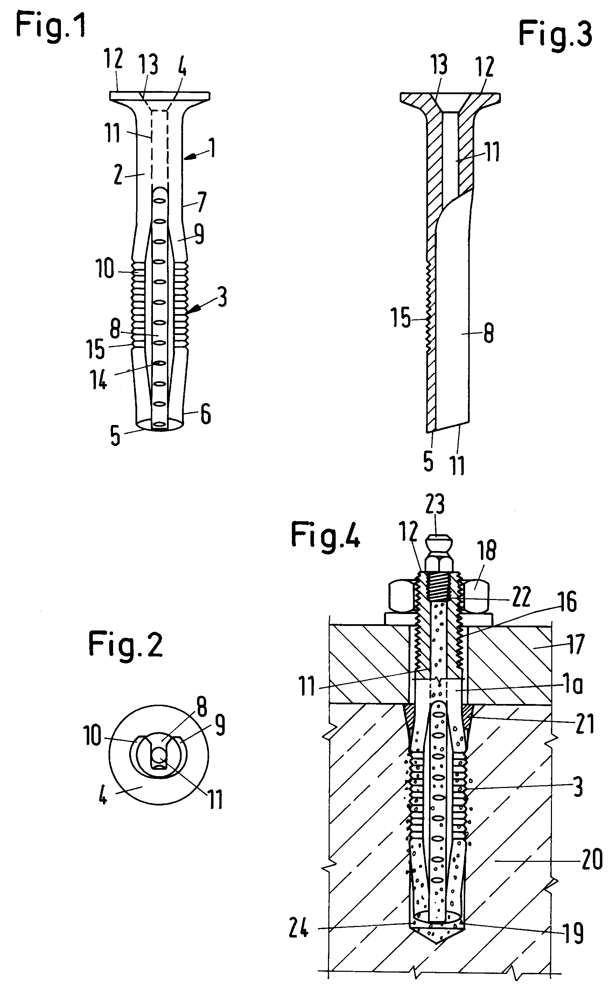

Das in Figur 1 dargestellte Befestigungselement 1 hat einen Schaft 2 mit einem Spreizbereich 3 und einen Nagelkopf 4. Der Spreizbereich 3 ist geringfügig von der vorderen Stirnseite 5 abgesetzt, so daß zwischen dieser Stirnseite 5 und dem Spreizbereich 3 ein gerader Schaftabschnitt 6 verbleibt. Ein längerer gerader Schaftabschnitt 7 erstreckt sich zwischen Spreizbereich 3 und Nagelkopf 4.

Das aus Metall hergestellte Befestigungselement 1 ist durch einen Kerbvorgang mittels eines Keils im Spreizbereich 3 aufgekerbt, so daß eine Längskerbe 8 mit U-förmigem Querschnitt entsteht. Die Längskerbe 8 wird von seitlichen Spreizschenkeln 9, 10 begrenzt, die nach außen gewölbt am Schaft 2 überstehen. Zum Einspritzen einer Verbundmasse weist das Befestigungselement 1 einen Injektionskanal 11 auf, der sich vom hinteren Stirnende 12 bis zur Längskerbe 8 erstreckt. Zum leichteren Ansetzen der Düse einer Kartusche (nicht dargestellt) ist der Injektionskanal mit einer V-förmigen Erweiterung 13 versehen. Zur Verzahnung des Befestigungselementes mit der eingespritzten Verbundmasse sind in der Innenfläche der Längskerbe 8 Querrippen 14 und an der Außenfläche des Spreizbereichs 3 eine durch Kerben gebildete Aufrauhung 15 vorgesehen.

In der Darstellung gemäß Figur 2 ist die U-förmige Aufkerbung der Längskerbe 8 erkennbar. Dadurch entsteht im Bereich des Kerbgrundes eine gleichmäßige Wandungsstärke für den Spreizbereich 3, der zu einer hohen Elastizität der nach außen gewölbten Spreizschenkel 9, 10 führt. Durch die Abflachung der Längskanten der Spreizschenkel 9, 10 wird das Einbiegen und die Anlage an der Bohrlochwandung begünstigt.

Der in Figur 3 dargestellte Längsschnitt zeigt das Befestigungselement von Figur 1, jedoch um 90 Grad gedreht. Der Injektionskanal 11 erstreckt sich vom hinteren Stirnende 12 des Befestigungselementes bis zur Längskerbe 8 und schafft somit eine Verbindung zum Spreizbereich 3.

In dem Ausführungsbeispiel gemäß Figur 4 besitzt das Befestigungselement 1a anstelle eines Nagelkopfes ein Außengewinde 16, auf das zur Verspannung und Halterung eines Gegenstandes 17 eine Mutter 18 aufgeschraubt ist. Zur Verankerung des Befestigungselementes 1a wird dieses in das Bohrloch 19 des Ankergrundes soweit eingetrieben, bis der Dichtring 21 etwa bündig mit der Bohrlochmündung im Ankergrund 20 abschließt. Danach wird in das Innengewinde 22 des Injektionskanals 11 ein Spritznippel 23 eingeschraubt. Mit einer auf den Spritznippel 23 passenden Injektionspresse wird die Verbundmasse 24 durch den Injektionskanal 11 in den Spreizbereich 3 des Befestigungselementes 1a eingespritzt. Durch einen entsprechenden Spritzdruck wird das Bohrloch 19 und Poren des Ankergrunds verfüllt, so daß gleichzeitig auch eine Verdichtung des den Spreizbereich 3 umgebenden Materials eintritt. Durch den Dichtring 21 wird ein Austreten der Verbundmasse aus dem Bohrloch 19 verhindert. Anschließend wird der zu befestigende Gegenstand 17 über den überstehenden Teil des Befestigungselementes 1a gestülpt und mit der Mutter 18 gegen den Ankergrund 20 verspannt. Durch die Aufrauhung 15 und den Querrippen 14 in der Längskerbe 8 ergibt sich zusätzlich zu der Verspannung des Spreizbereichs 3 im Bohrloch 19 eine Verzahnung mit der ausgehärteten Verbundmasse, die hohe Haltewerte des verankerten Befestigungselementes ermöglicht.

## Patentansprüche

1. Befestigungselement mit einem im Abstand von der vorderen Stirnseite angeordneten und durch Einschlagen verankerbaren Spreizbereich, der durch zwei gewölbte, den Schaft des Befestigungselementes seitlich überragenden Spreizschenkeln gebildet ist, zwischen denen ein Freiraum verläuft und die an beiden Enden des Spreizbereichs in gerade Schaftabschnitte übergehen, **dadurch gekennzeichnet**, daß der Freiraum als Längskerbe (8) ausgebildet ist, die von dem vor dem Spreizbereich (3) liegenden geraden Schaftabschnitt (7) ausgeht und bis zur vorderen Stirnseite (5) verläuft, und daß das Befestigungselement (1, 1a) einen Injektionskanal (11) für das Einspritzen einer Verbundmasse aufweist, der sich vom hinteren Stirnende (12) ausgehend bis zur Längskerbe (8) erstreckt.

2. Befestigungselement nach Anspruch 1, **dadurch gekennzeichnet**, daß der Injektionskanal (11) am hinteren Stirnende (12) eine V-förmige Erweiterung (13) aufweist.

3. Befestigungselement nach Anspruch 1, **dadurch gekennzeichnet**, daß in den Injektionskanal (11) ein am hinteren Stirnende (12) abstehender Spritznippel (23) eingesetzt ist.

4. Befestigungselement nach Anspruch 1, **dadurch gekennzeichnet**, daß die Innenfläche der Längskerbe (8) mit vorzugsweise quer zur Längsrichtung stehenden Rippen (14) versehen ist.

5. Befestigungselement nach Anspruch 1, **dadurch gekennzeichnet**, daß die Spreizschenkel (9, 10) an ihrer Außenfläche eine durch Kerben gebildete Aufrauhung (15) aufweisen.

6. Befestigungselement nach Anspruch 1, **dadurch gekennzeichnet**, daß am Übergangsbereich von dem vor dem Spreizbereich (3) liegenden geraden Schaftabschnitt (7) zum Spreizbereich (3) ein aus einem elastischen Kunststoff bestehender Dichtring (21) angeordnet ist.
